(19) Europäisches Patentamt
European Patent Office
Office européen des brevets

(11) Publication number: 0 047 999
B1

(12) # EUROPEAN PATENT SPECIFICATION

(45) Date of publication of patent specification: 20.12.89

(51) Int. Cl.$^4$: C 08 G 75/23

(21) Application number: 81107193.5

(22) Date of filing: 11.09.81

(54) **Use of aromatic amorphous thermoplastic polymers for the production of molded articles.**

(30) Priority: 12.09.80 US 186466

(43) Date of publication of application:
24.03.82 Bulletin 82/12

(45) Publication of the grant of the patent:
20.12.89 Bulletin 89/51

(84) Designated Contracting States:
AT BE CH DE FR GB IT LI NL SE

(56) References cited:
EP-A-0 000 361
EP-A-0 008 894
CA-A- 847 963
GB-A-1 141 030
US-A-3 647 751
US-A-4 175 175
KUNSTSTOFFE, Vol. 69, No. 1, 1979 Munchen
A.A. GONCZY "Polysulfon-ein hochwärmebeständiger, transparenter Kunststoff" pages 12 to 17

**The file contains technical information submitted after the application was filed and not included in this specification**

(73) Proprietor: AMOCO CORPORATION
200 East Randolph Drive P.O. Box 5910-A
Chicago Illinois 60680 (US)

(72) Inventor: Maresca, Louis Michael
R.D. No. 1 Box 139A Riverview Terrace
Belle Mead 08502 N.J. (US)

(74) Representative: Weinhold, Peter, Dr. et al
Patentanwälte Dr. V. Schmied-Kowarzik Dipl.-Ing. G. Dannenberg Dr. P. Weinhold Dr. D. Gudel Dipl.-Ing. S. Schubert Dr. P. Barz
Siegfriedstrasse 8
D-8000 München 40 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 047 999 B1

**Description**

Use of aromatic amorphous thermoplastic polymers for the production of molded articles.

This invention is directed to the use of special amorphous thermoplastic polymers containing sulfone groups for the production of molded articles.

Polyarylene polyethers are described in, or example, US—A—4,175,175. This patent describes a polymer which has the following structure:

(A) 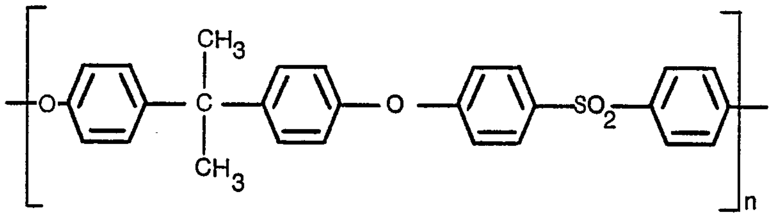

This polymer is commercially available and is a tough, rigid, high strength thermoplastic which maintains its properties over a wide temperature range from −100°C (−150°F) to above 150°C (300°F). Polymer (A) has a good combination of mechanical properties and excellent electrical properties. Said polymer is highly resistant to mineral acids, alkali and salt solutions but will be attacked by environments such as polar organic solvents. Thus, there is a need to improve the environmental resistance, particularly the environmental stress crack resistance of Polymer (A) so that it can be used in applications where it will be exposed to a solvent environment.

Attempts have been made to develop polymers which have the good properties of polymer (A) and additionally, improved environmental stress crack resistance.

The following polymer (B):

(B) 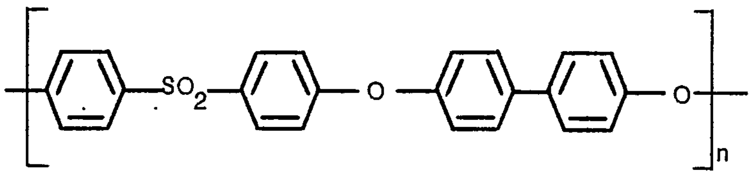

has a good balance of mechanical properties, and possesses higher notched impact strength and heat deflection temperature than polymer (A). Additionally, polymer (B) has improved stress crack resistance. However, polymer (B) is prepared from 4,4'-dichlorodiphenyl sulfone and 4,4'-biphenol. The 4,4'-biphenol is difficult and costly to prepare and does not readily lend itself to commercialization.

Accordingly a need still exists for polymer materials for molding purposes which have a good combination of mechanical properties including high notched Izod impact values and high heat distortion temperatures and also an excellent environmental stress crack resistance. These thermoplastic polymer materials for molding should be easily preparable and inexpensive.

Accordingly, this invention is directed to the use of an amorphous thermoplastic polymer containing units of the formula:

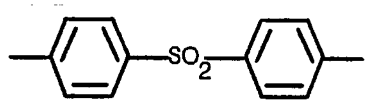 unit I

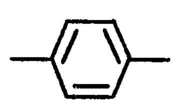 unit II

said units being attached to each other by an-O-bond and the ratio of unit (I) to unit (II) being in the range of from 62.5:37.5 to 95:5, preferably from 70:30 to 85:15, for the production of molded articles.

The polymers defined above are already known from EP—A—8894. However, in said application nothing is disclosed as to their properties and the only suggested use is as starting materials for the production of sulphonated polyarylethersulfone copolymers which in turn may be used as membrane materials.

The polymers preferably used according to the invention contain units of the formula:

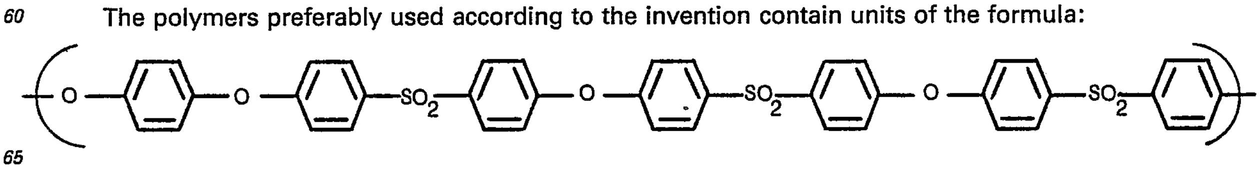

The above polymers have a reduced viscosity of from about 0.4 to about 2.5 dl/g or greater, as measured in N-methylpyrrolidone, or other suitable solvent at 25°C.

The polymers used according to this invention may be prepared by reacting the monomers represented by the following formulae:

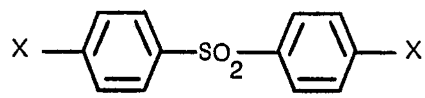

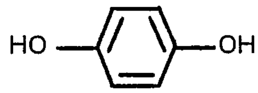 (hydroquinone)

wherein

X is independently selected from Cl, Br, F, $NO_2$, or OH.

The ratio of the concentration of OH groups to Cl, Br, F and/or $NO_2$ groups used to form the polymer is from about 0.90 to about 1.10, preferably from about 0.98 to about 1.02.

The preferred monomers include hydroquinone, 4,4'-dichlorodiphenyl sulfone and 4,4'-dihydroxydiphenyl sulfone.

The polymers may be prepared by contacting substantially equimolar amounts of the hydroxy containing compounds (depicted in formulae (III) and (IV) *supra*) and halo and/or nitro containing compounds (depicted in formula (III), *supra*) with from about 0.5 to about 1.0 mole of an alkali metal carbonate per mole of hydroxyl group in a solvent mixture comprising a solvent which forms an azeotrope with water in order to maintain tbe reaction medium at substantially anhydrous conditions during the polymerization.

The temperature of the reaction is kept at from about 120 to about 180°C, for about 1 to about 5 hours and then raised and kept at from about 200 to about 250°C, preferably from about 210 to about 230°C, for about 1 to 5 hours.

The reaction is carried out in an inert atmosphere, e.g., nitrogen, at atmospheric pressure, although higher or lower pressures may also be used.

The polymer is then recovered by conventional techniques such as coagulation, solvent evaporation, and the like.

The solvent mixture comprises a solvent which forms an azeotrope with water and a polar aprotic solvent. The solvent which forms an azetrope with water includes an aromatic hydrocarbon such as benzene, toluene, xylene, ethylbenzene, chlorobenzene, and the like.

The polar aprotic solvents employed are those generally known in the art for the manufacture of polyarylether sulfones and include sulfur containing solvents such as those of the formula:

$$R_1—S(O)_b—R_1$$

in which $R_1$ represents a monovalent lower hydrocarbon group free of aliphatic unsaturation, which preferably contains less than about 8 carbon atoms or when connected together represents a divalent alkylene group with b being an integer from 1 to 2 inclusive. Thus, in all of these solvents all oxygens and two carbon atoms are bonded to the sulfur atom. Contemplated for use are such solvents as those having the formula:

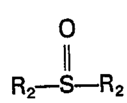 and 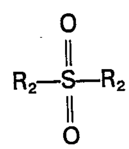

where the $R_2$ groups are independently lower alkyl, such as methyl, ethyl, propyl, butyl, and like groups, and aryl groups such as phenyl and alkylphenyl groups as well as those where the $R_2$ groups are interconnected as in a divalent alkylene bridge such as

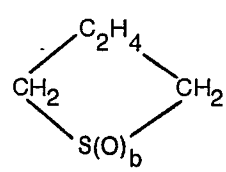

dimethylsulfone, diphenylsulfone, diethylsulfoxide, diethylsulfone, diisopropylsulfone, tetrahydrothiophene, 1,1-dioxide (commonly called tetramethylene sulfone or sulfolane) and tetrahydrothiophene-1 monoxide.

Additionally, nitrogen containing solvents may be used. These include dimethyl acetamide, dimethyl formamide and N-methylpyrrolidone.

The azeotrope forming solvent and polar aprotic solvent are used in a weight ratio of from about 10:1 to about 1:1, preferably from about 7:1 to about 5:1.

In the reaction, the hydroxy containing compound is slowly converted, *in situ,* to the alkali salt thereof by reacting it with the alkali metal carbonate. The alkali metal carbonate is preferably potassium carbonate.

Water is continuously removed from the reaction mass as an azeotrope with the azeotrope forming solvent so that substantially anhydrous conditions are maintained during the polymerization.

It is essential that the reaction medium be maintained substantially anhydrous during the polycondensation. While amounts of water up to about one per cent can be tolerated, and are somewhat beneficial when employed with fluorinated dihalobenzenoid compounds, amounts of water substantially greater than this are desirably avoided as the reaction of water with the halo and/or nitro compound leads to formation of phenolic species and only low molecular weight products are secured. Consequently, in order to secure the high molecular weight polymers, the system should be substantially anhydrous, and preferably contain less than 0.5 per cent by weight of water during the reaction.

Preferably, after the desired molecular weight has been attained, the polymer is treated with an activated aromatic halide or an aliphatic halide such as methyl chloride or benzyl chloride, and the like. Such treatment of the polymer converts the terminal hydroxyl groups into ether groups which stabilize the polymer. The polymer so treated has good melt and oxidative stability.

## Examples

The following examples illustrate the preparation of specific polymers to be used according to the present invention.

In these examples, all parts and percentages are on a weight basis unless otherwise specified.

The following Examples 1 to 4 describe the preparation of a random polymer.

### Example 1

A four neck 1000 ml round-bottom flask was equipped with a mechanical stirrer, thermometer, addition funnel, dry nitrogen inlet, and vacuum jacketed vigreux column with Dean Stark trap and condenser. Into the flask were charged 143.58 g (0.50 moles) of 4,4′-dichlorodiphenyl sulfone, 62.58 g (0.25 moles) of 4,4′-dihydroxydiphenyl sulfone, 27.56 g (0.25 moles) of hydroquinone, 76.02 g (0.55 moles) of potassium carbonate, 100 ml of toluene and 466 ml of sulfolane. The mixture was purged with nitrogen for 1 hour at room temperature and then heated to reflux (141°C). After 1 hour at reflux, the temperature of the reaction was increased to about 200°C by slowly removing the toluene. After about 5 hours at 200°C, the reaction terminated by adding methyl chloride. The polymer so produced was recovered by coagulation in water followed by washing the polymer several times with hot water (80°C). A theoretical yield of the polymer was obtained. The polymer had a reduced viscosity of 0.61 dl/g as measured in N-methylpyrrolidinone (0.2 g/100 ml) at 25°C. The polymer was made up of the following repeating unit:

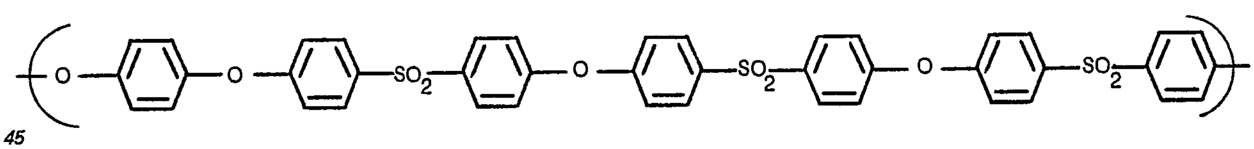

### Examples 2 to 4

The procedure as described in Example 1 was exactly repeated except that the mole ratio of 4,4′-dihydroxy-diphenyl sulfone (DHDPS) and hydroquinone (HQ) was varied and is shown in Table I. The reduced viscosity of the polymers formed were measured, as described in Example 1. The results are shown in Table I.

TABLE I

| Example | Mole Ratio of DHDPS/HQ | Reduced Viscosity (dl/g) |
|---|---|---|
| 1 | 50/50 | 0.61 |
| 2 | 25/75 | 0.45 |
| 3 | 50/50 | 0.54 |
| 4 | 75/25 | 0.43 |

The polymers prepared in Examples 1 to 4 were compression molded at about 300°C into ASTM test bars and tested for the following properties: Tensile strength and modulus according to ASTM D—638; yield strength according to ASTM D—790; elongation at break according to ASTM D—638; pendulum impact strength according to ASTM D—1822. The glass transition temperature (Tg) of the polymer was obtained by a dynamic mechanical method using a torsion pendulum as described in L. E. Nielsen, Mechanical Properties of Polymers, Van Nostrand-Reinhold, Princeton, New Jersey. Also, the reduced viscosity of the polymer is shown.

Controls A and B were also tested as described to determine their physical properties. The reduced viscosity of the Controls was measured in methylene chloride at 25°C (0.2 g/100 ml).

Control A is a polymer of the following formula:

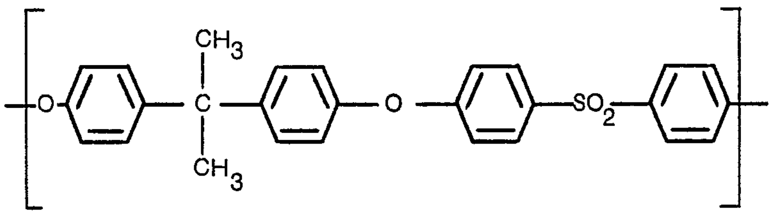

and Control B has the following formula:

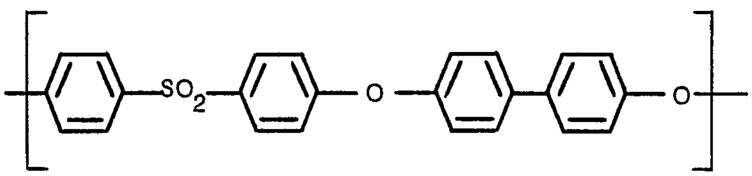

The results are shown in Table II.

TABLE II

| Example | Tensile modulus N/mm² (psi) | Tensile strength N/mm² (psi) | Yield strength (N/mm² (psi) | Elongation (%) |
|---|---|---|---|---|
| Control A | 2550 (370,000) | 68.9 (10,000) | 68.9 (10,000) | 50 |
| Control B | 2210 (321,000) | 73.0 (10,600) | 73.0 (10,600) | 78 |
| 1 | 1910 (277,000) | 73.0 (10,600) | 73.0 (10,600) | 18 |
| 2 | 1935 (281,000) | 78.5 (11,400) | 78.5 (11,400) | 7 |
| 3 | 1920 (279,000) | 75.8 (11,000) | 75.8 (11,000) | 8 |
| 4 | 2025 (294,000) | 81.3 (11,800) | 81.3 (11,800) | 8 |

| Example | Pendulum impact MJ/m³ (ft.lbs/in³) | | Tg(°C) | Reduced viscosity (dl/g) |
|---|---|---|---|---|
| Control A | 12.4 | (150) | 185 | 0.50 |
| Control B | 24.8 | (300) | 215 | 0.55 |
| 1 | 9.8 | (118) | 200 | 0.61 |
| 2 | 7.7 | (93) | 180 | 0.45 |
| 3 | 8.0 | (97) | 205 | 0.54 |
| 4 | 5.2 | (63) | 210 | 0.43 |

**Claims**

1. Use of an amorphous thermoplastic polymer containing units of the formula

(I) 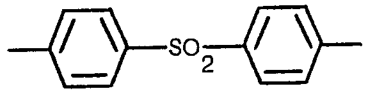 and (II) 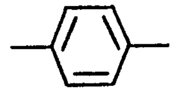

said units (I) and (II) being attached to each other by an —O-bond and the ratio of unit (I) to unit (II) being in the range of from 62.5:37.5 to 95:5 for the production of molded articles.

2. Use of an amorphous polymer as defined in claim 1 the ratio of unit (I) to unit (II) of said polymer being in the range from 70:30 to 85:15 for the production of molded articles.

3. Use of an amorphous polymer having the following repeating unit:

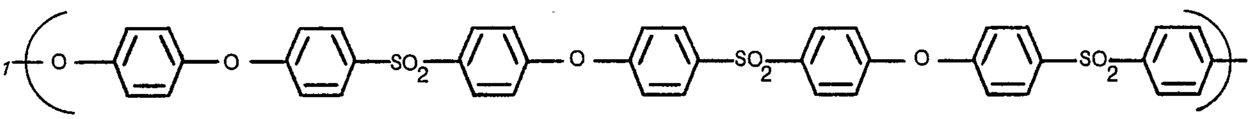

according to claim 1.

**Patentansprüche**

1. Verwendung eines amorphen, thermoplastischen Polymers, das Einheiten der Formel

(I) 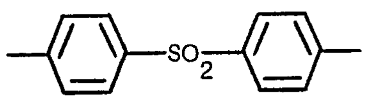 und (II) 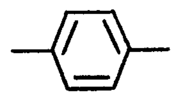

enthält, wobei die Einheiten (I) und (II) durch eine —O-Bindung aneinander gebunden sind und das Verhältnis von Einheit (I) zu Einheit (II) im Bereich von 62,5:37,5 bis 95:5 liegt, zur Herstellung von Formgegenständen.

2. Verwendung eines amorphen Polymers gemäß Anspruch 1, wobei das Verhältnis von Einheit (I) zu Einheit (II) von diesen im Bereich von 70:30 bis 85:15 liegt, zur Herstellung von Formgegenständen.

3. Verwendung eines amorphen Polymers mit der folgenden wiederkehrenden Einheit

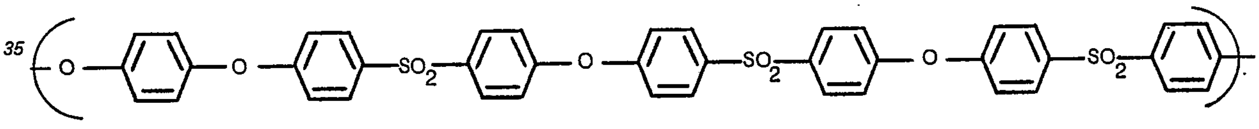

gemäß Anspruch 1.

**Revendications**

1. Utilisation d'un polymère thermoplastique amorphe contenant des motifs de formule

(I) 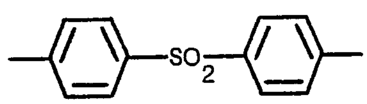 et (II) 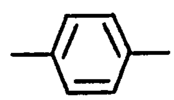

lesdits motifs (I) et (II) étant attachés l'un à l'autre par une liaison —O— et le rapport du motif (I) au motif (II) étant compris dans l'intervalle de 62,5:37,5 à 95:5, pour la production d'articles moulés.

2. Utilisation d'un polymère amorphe tel que défini dans la revendication 1, dans lequel le rapport du motif (I) au motif (II) est compris dans l'intervalle de 70:30 à 85:15, pour la production d'articles moulés.

3. Utilisation d'un polymère amorphe présentant le motif répéte suivant:

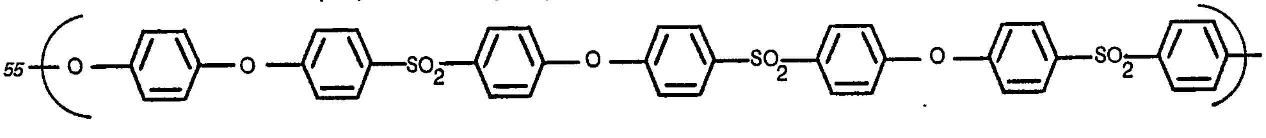

conformément à la revendication 1.